# EUROPÄISCHE PATENTANMELDUNG

(11) **EP 4 741 871 A1**
(43) Veröffentlichungstag der Anmeldung: **13.05.2026**
(21) Anmeldenummer: 25213787.2
(22) Anmeldetag: 05.11.2025
(51) Int. Cl.: G01S 7/40, F16P 3/12, G01S 13/04, G01S 13/42, G01S 13/88

(54) **VERFAHREN UND VORRICHTUNG ZUR ABSICHERUNG EINER RADARSENSORKOMPONENTE**

(30) Priorität: 08.11.2024 DE 102024132663
(71) Anmelder: Pilz GmbH & Co. KG, 73760 Ostfildern (DE)
(72) Erfinder: Weißbach, Martin, 73760 Ostfildern (DE); Brühl, Steffen, 73760 Ostfildern (DE); Bauer, Peter, 73760 Ostfildern (DE); Hoberg, Daniel, 73760 Ostfildern (DE); Wietfeld, Martin, 73760 Ostfildern (DE)
(74) Vertreter: Witte, Weller & Partner Patentanwälte mbB

(57) **Zusammenfassung**

Verfahren zur Absicherung einer Radarsensorkomponente (42), die eine Vielzahl von Subsystemen (44; 64; 70; 76) aufweist. Ein zu überwachendes Subsystem (70) weist mindestens einen digitalen Signalprozessor (72) und einen Arbeitsspeicher (74) auf, in dem während einer Radarauswertung unter Verwendung der Radarsensorkomponente (42) von einer Radarhardwarekomponente erfasste Rohdaten (86) in einer mehrdimensionalen Matrix ablegbar sind. Während der Radarauswertung werden künstliche Objektdaten (88), die mindestens ein künstliches Objekt in der Radarauswertung mit einem vorbestimmten Auswerteergebnis erzeugen, zusätzlich zu den Rohdaten (86) der Radarhardwarekomponente in den Arbeitsspeicher (74) eingespeist. Nach dem Einspeisen wird überprüft, ob sich das vorbestimmte Auswerteergebnis für das mindestens eine künstliche Objekt bei der Radarauswertung einstellt.

## Beschreibung

Die vorliegende Offenbarung betrifft ein Verfahren sowie eine Vorrichtung zur Absicherung einer Radarsensorkomponente.

Radarsensoren, insbesondere industrielle mmWave-Radarsensoren, werden in der Automatisierungstechnik als sichere Radarsensoren zur effektiven Überwachung von Schutzräumen eingesetzt. Diese Sensoren bieten eine hohe Zuverlässigkeit und Genauigkeit, die in sicherheitskritischen Anwendungen erforderlich ist, um Unfälle zu vermeiden und die Sicherheit an Maschinen und technischen Anlagen zu gewährleisten.

Radarsensoren überwachen Schutzräume, indem sie Bewegungen und Objekte innerhalb definierter Zonen detektieren. Sie senden kontinuierlich Signale im Millimeterwellenbereich aus, die von Objekten reflektiert und von den Sensoren empfangen werden. Die reflektierten Signale werden ausgewertet, um Abstand, Geschwindigkeit und Richtung der Objekte zu bestimmen. Dringt ein Objekt in einen Gefahrenbereich ein, kann das System reagieren und eine technische Anlage oder Maschine in einen sicheren Zustand überführen, um Unfälle zu vermeiden. Die Genauigkeit der Radarsensoren stellt sicher, dass auch kleine und sich schnell bewegende Objekte zuverlässig erkannt werden.

Ein entscheidender Vorteil der mmWave-Radarsensoren ist ihre Unempfindlichkeit gegenüber äußeren Einflüssen wie Staub, Schmutz, Regen, Licht oder Funkenflug. Während optische Sensoren unter solchen Bedingungen oft an ihre Grenzen stoßen und unzuverlässig werden, bleiben Radarsensoren funktionsfähig und präzise. Diese Robustheit macht sie ideal für den Einsatz in rauen Umgebungen wie im Außenbereich, in der Schwerindustrie und in der Holzverarbeitung, wo sie auch unter widrigen Bedingungen eine zuverlässige Überwachung gewährleisten.

Ein Radarsensor, der in der sicheren Automatisierungstechnik eingesetzt wird, setzt sich aus mehreren Komponenten zusammen, die im Zusammenspiel eine präzise und zuverlässige Objekterkennung gewährleisten. Unter anderem kann ein Radarsensor aus einer Sende- und Empfangsantenne, einem Hochfrequenz-Frontend, einem digitalen Signalprozessor (DSP), einem Mikrocontroller, Speicherbausteinen, Kommunikationsschnittstellen, einer zuverlässigen Stromversorgung und einem robusten Gehäuse gebildet sein.

Teile dieser Komponenten können als integrierte Schaltung in einem sogenannten Ein-Chip-System (engl. System-On-Chip (SoC)) zusammengefasst werden. Jede Komponente bildet dann ein Subsystem innerhalb des Chips. Die Chips können fertig bezogen und in Radarsensoren integriert werden. Für sicherheitskritische Anwendungen muss dabei jede einzelne Komponente normativen Vorgaben entsprechen, um eine entsprechende Zulassung für den Betrieb nach einem definierten Sicherheitsniveau zu erhalten. Beispiele für sicherheitstechnische Klassifizierungen sind unter anderem SIL (engl. Safety Integrity Level) und ASIL (engl. Automotive Safety Integrity Level). Beides sind Klassifizierungen, die in verschiedenen Sicherheitsnormen verwendet werden, um das Sicherheitsniveau von Systemen zu bewerten. Die SIL-Klassifizierung wird in der Norm IEC 61508 definiert, die in der industriellen Automatisierung verwendet wird, um die funktionale Sicherheit von elektrischen und elektronischen Systemen zu gewährleisten. Die ASIL-Klassifizierung wird in der Norm ISO 26262 definiert, die in der Automobilindustrie verwendet wird, um die funktionale Sicherheit von Fahrzeugsystemen zu gewährleisten.

Ein Radarsensor kann für SIL und ASIL zertifiziert werden, z. B. SIL 2 oder ASIL B, indem seine Subsysteme als Teil einer Sicherheitsfunktion auf ihre Fähigkeit zur sicheren Funktion überprüft und validiert werden. Bei einem Ein-Chip-System müssen die Subsysteme im Kontext ihrer Rolle innerhalb der Sicherheitsfunktion betrachtet werden, um die Sicherheitsanforderungen zu erfüllen. Zum Beispiel kann das Hochfrequenz-Frontend so entworfen und getestet werden, dass es die Anforderungen einer Sicherheitsfunktion für SIL2 oder ASIL B unterstützt. Andere kritische Bereiche des Ein-Chip-Systems, wie der digitale Signalprozessor (DSP), können nicht direkt als eigenständige Komponenten zertifiziert werden. Sie müssen durch zusätzliche Maßnahmen des Systemintegrators oder des Endanwenders, wie etwa den Einsatz einer separaten Safety-CPU, abgesichert werden. Beispielsweise kann eine zusätzliche CPU die Rechenergebnisse des DSP überwachen und verifizieren ("nachrechnen"), um sicherzustellen, dass die Sicherheitsanforderungen auch tatsächlich erfüllt werden. Alternativ können einzelne Subsysteme redundant ausgelegt werden, um die Sicherheitsanforderungen der Gesamtfunktion zu erfüllen.

Durch die Kombination von zertifizierten Subsystemen und zusätzlichen Schutzmaßnahmen, einschließlich der Implementierung eines externen zweiten Kanals, kann ein Radarsensor insgesamt die Anforderungen von SIL2 und ASIL B erfüllen. Ein zweiter Kanal dient als redundantes System, das die Berechnungen und Funktionen des primären Systems überwacht und validiert, um sicherzustellen, dass jede Abweichung oder Fehlfunktion erkannt und entsprechende Gegenmaßnahmen ergriffen werden können. Diese Redundanz erhöht die Zuverlässigkeit und Sicherheit, da die Wahrscheinlichkeit gefährlicher Ausfälle verringert wird.

Die Implementierung eines externen zweiten Kanals ist jedoch oft mit erheblichen Kosten und Aufwand verbunden. Ein zweiter Kanal erfordert zusätzliche Hardware, die nicht nur Kosten verursacht, sondern auch den Platzbedarf und den Energieverbrauch des Gesamtsystems erhöht. Darüber hinaus ist die Entwicklung und Integration eines zweiten Kanals technisch komplex und zeitaufwendig, da er perfekt mit dem Primärsystem synchronisiert und kalibriert werden muss. Dies kann insbesondere in kostensensiblen Anwendungen mit begrenztem Platz problematisch sein. Es ist daher wünschenswert, alternative Sicherungsmethoden zu entwickeln, die ähnliche Sicherheitsniveaus erreichen, aber kostengünstiger und weniger aufwendig sind.

DE 100 17 333 C2 zeigt eine Schutzvorrichtung zum Absichern eines Gefahrenbereichs bekannt, bei der eine Bildaufnahmeeinheit mit einem Bildsensor und eine Testeinrichtung vorgesehen sind, um die Funktionssicherheit der Bildaufnahmeeinheit zu überprüfen. Hierzu wird das aufgenommene Objektbild gezielt verändert ("dynamisiert"), sodass eine Überprüfung einzelner Bildpunkte im laufenden Betrieb möglich ist, ohne dass die Schutzfunktion unterbrochen wird. Die Druckschrift zeigt damit ein Verfahren zur Selbstprüfung eines Sensorsystems, das eine kontinuierliche Überwachung der Funktionsfähigkeit ermöglicht.

Vor diesem Hintergrund ist es eine Aufgabe der vorliegenden Offenbarung, eine Vorrichtung und ein Verfahren anzugeben, die eine alternative Sicherungsmethode bereitstellen, jedoch kostengünstiger und weniger aufwendig sind.

Gemäß einem Aspekt der vorliegenden Offenbarung wird diese Aufgabe gelöst durch ein Verfahren zur Absicherung einer Radarsensorkomponente, die eine Vielzahl von Subsystemen aufweist, wobei ein zu überwachendes Subsystem mindestens einen digitalen Signalprozessor und einen Arbeitsspeicher aufweist, in dem während einer Radarauswertung unter Verwendung der Radarsensorkomponente von einer Radarhardwarekomponente erfasste Rohdaten in einer mehrdimensionalen Matrix ablegbar sind, wobei während der Radarauswertung künstliche Objektdaten, die mindestens ein künstliches Objekt in der Radarauswertung mit einem vorbestimmten Auswerteergebnis erzeugen, zusätzlich zu den Rohdaten der Radarhardwarekomponente in den Arbeitsspeicher eingespeist werden, wobei nach dem Einspeisen überprüft wird, ob sich das vorbestimmte Auswerteergebnis für das mindestens eine künstliche Objekt bei der Radarauswertung einstellt.

Gemäß einem weiteren Aspekt wird diese Aufgabe gelöst durch eine entsprechende Vorrichtung zur Absicherung einer Radarsensorkomponente, die eine Vielzahl von Subsystemen aufweist, wobei ein zu überwachendes Subsystem mindestens einen digitalen Signalprozessor und einen Arbeitsspeicher aufweist, in dem während einer Radarauswertung unter Verwendung der Radarsensorkomponente von einer Radarhardwarekomponente erfasste Rohdaten in einer mehrdimensionalen Matrix ablegbar sind, wobei die Vorrichtung eine Verarbeitungseinheit aufweist, die eingerichtet ist, während der Radarauswertung künstliche Objektdaten, die mindestens ein künstliches Objekt in der Radarauswertung mit einem vorbestimmten Auswerteergebnis erzeugen, zusätzlich zu den Rohdaten der Radarhardwarekomponente in den Arbeitsspeicher einzuspeisen, sowie nach dem Einspeisen zu überprüfen, ob sich das vorbestimmte Auswerteergebnis für das mindestens eine künstliche Objekt bei der Radarauswertung einstellt.

Eine Idee der vorliegenden Offenbarung zur Absicherung eines Subsystems einer Radarsensorkomponente besteht somit darin, künstliche Objektdaten in den Arbeitsspeicher einzuspeisen und die Sicherheit durch kontinuierliche Selbstüberwachung und Fehlererkennung zu gewährleisten, ohne dass ein vollständig redundantes System erforderlich ist.

Dieser Ansatz bietet mehrere Vorteile. Ein Vorteil des Verfahrens ist z. B. die Möglichkeit, die Funktionsfähigkeit des digitalen Signalprozessors und der zugehörigen Recheneinheiten kontinuierlich zu überwachen. Durch die gezielte Einspeisung von künstlichen Objektdaten, die vordefinierte Auswerteergebnisse erzeugen, kann das System in Echtzeit validieren, ob der digitale Signalprozessor korrekt arbeitet. Auf diese Weise können Fehler oder Abweichungen erkannt werden, bevor sie zu gefahrbringenden Ausfällen führen. Dies erhöht die Zuverlässigkeit und Sicherheit des Radarsensorsystems, ohne dass zusätzliche Hardware benötigt wird.

Ein weiterer Vorteil dieses Verfahrens ist die Reduzierung der Systemkosten und Systemkomplexität im Vergleich zur Implementierung eines externen zweiten Kanals. Ein zweiter Kanal, der normalerweise für Redundanz und Fehlerüberwachung verwendet wird, ist teuer und benötigt zusätzlichen Platz und Energie. Das neue Verfahren umgeht diese Notwendigkeit, indem es die Fehlerüberwachung intern, d. h. einkanalig, durchführt. Das spart nicht nur Kosten, sondern vereinfacht auch das Design und die Integration des Radarsensors in bestehende Systeme. Die künstlichen Objektdaten werden einfach in den Arbeitsspeicher eingespeist und durchlaufen die gleichen Verarbeitungsketten wie die realen Daten.

Zusätzlich verbessert das Verfahren die Effizienz und Leistungsfähigkeit des Radarsensorsystems. Da die künstlichen Objektdaten in der gleichen mehrdimensionalen Matrix gespeichert und verarbeitet werden wie die realen Rohdaten, kann das System seine Verifikationsprozesse ohne signifikante Verzögerungen durchführen. Dadurch bleibt die Echtzeitfähigkeit des Radarsensors erhalten, was insbesondere in sicherheitskritischen Anwendungen von großer Bedeutung ist und beispielsweise durch eine externe Safety-CPU, die die Ergebnisse des digitalen Signalprozessors "nachrechnet", nicht gewährleistet werden kann.

Darüber hinaus kann das Verfahren durch kontinuierliche Verifikation und Validierung auch zur Optimierung der Signalverarbeitungsalgorithmen beitragen, indem es regelmäßig Rückmeldung über deren Genauigkeit und Zuverlässigkeit gibt. Insgesamt stellen das Verfahren und das Gerät eine vorteilhafte Alternative zu bekannten Maßnahmen dar und erhöhen sowohl die Sicherheit als auch die Effizienz industrieller Radarsensorsysteme auf kostengünstige und effektive Weise. Die eingangs gestellte Aufgabe ist damit vollständig gelöst.

In einer weiteren Ausgestaltung beinhaltet die Radarauswertung eine lineare Ablauffolge mit sequenziell aufeinanderfolgenden Prozessschritten, wobei die künstlichen Objektdaten jeden der aufeinanderfolgenden Prozessschritte durchlaufen.

Die lineare Ablauffolge mit sequenziell aufeinanderfolgenden Prozessschritten in der Radarauswertung bietet Vorteile für die Sicherheit und Zuverlässigkeit des Systems. Da die künstlichen Objektdaten jeden Prozessschritt durchlaufen, ist eine kontinuierliche und vollständige Überprüfung des gesamten Verarbeitungssystems gewährleistet. Jeder Verarbeitungsschritt, von der Ablage der Rohdaten im Arbeitsspeicher bis zur abschließenden Analyse, kann somit durch die künstlichen Objekte validiert werden. Dadurch wird sichergestellt, dass Fehler oder Abweichungen in jedem Schritt sofort erkannt werden. Die Integrität der gesamten Verarbeitungskette wird somit sichergestellt und die Zuverlässigkeit des Systems erhöht.

Ein weiterer Vorteil dieses Designs ist die Vermeidung paralleler oder verzweigter Prozesse, die die Komplexität und die Fehleranfälligkeit erhöhen können. Durch die sequentielle Verarbeitung wird die Komplexität des Systems reduziert, was die Fehleranfälligkeit verringert und die Wartung und Überprüfung des Systems erleichtert. Dies bedeutet auch, dass die Verarbeitung der Daten konsistent und vorhersehbar ist, was für sicherheitskritische Anwendungen von Bedeutung ist.

Die kontinuierliche und vollständige Überprüfung jedes Prozessschrittes durch die künstlichen Objektdaten trägt auch zur Optimierung der Signalverarbeitungsalgorithmen bei. Da jeder Schritt regelmäßig überprüft und validiert wird, kann das System kontinuierlich Rückmeldung über die Algorithmen geben und so deren Genauigkeit und Effizienz verbessern. Dies führt zu einer besseren Gesamtleistung des Radarsensorsystems und ermöglicht eine schnellere und genauere Erkennung und Reaktion auf sicherheitskritische Ereignisse. Insgesamt bietet die lineare Sequenz in der Radarauswertung eine robuste und effiziente Methode zur Gewährleistung der Systemintegrität und -sicherheit.

In einer weiteren Ausgestaltung beinhaltet die Radarauswertung zwei oder mehrere parallele, lineare Ablauffolgen mit sequenziell aufeinanderfolgenden Prozessschritten, wobei künstliche Objektdaten für jede der parallelen Ablauffolgen passend ausgebildet sind.

Ein Vorteil dieser Ausgestaltung ist, dass auch bei parallelen Ablauffolgen eine gleichwertige sicherheitstechnische Absicherung erreicht werden kann. Dies bedeutet, dass die einzelnen Prozessketten, die parallel laufen, ebenfalls auf ihre Funktionalität und Sicherheit überwacht werden können, ohne dass eine der Ablauffolgen benachteiligt oder vernachlässigt wird. Die künstlichen Objektdaten werden so gestaltet, dass sie in jeder der parallelen Prozessketten gezielt zur Validierung der sicherheitsrelevanten Funktionen eingesetzt werden. Dadurch kann sichergestellt werden, dass jede der parallelen Ablauffolgen unabhängig geprüft und überwacht wird, was die Sicherheit des Gesamtsystems weiter verbessern kann.

Durch die parallele Ausführung mehrerer Ablauffolgen können unterschiedliche Funktionen oder Datenströme des Radarsystems gleichzeitig verarbeitet werden, was die Effizienz des Systems erhöht. Die gleichzeitige Überwachung dieser parallelen Abläufe stellt sicher, dass Fehler oder Abweichungen in einer der Ablauffolgen erkannt werden.

In einer weiteren Ausgestaltung schreibt die Radarhardwarekomponente zyklisch Rohdaten in den Arbeitsspeicher für die Radarauswertung und die künstlichen Objektdaten werden zyklisch in den Arbeitsspeicher geschrieben.

Die zyklische Einspeisung von Rohdaten und künstlichen Objektdaten in den Arbeitsspeicher während der Radarauswertung bietet Vorteile für die kontinuierliche Überwachung und Validierung des Systems. Ein Vorteil dieser Ausgestaltung ist z. B. die Möglichkeit der kontinuierlichen Echtzeitüberwachung. Da in jedem Zyklus sowohl reale Rohdaten als auch künstliche Objektdaten in den Arbeitsspeicher geschrieben werden, kann das System in regelmäßigen Abständen validieren, ob alle Komponenten, insbesondere der digitale Signalprozessor, korrekt arbeiten. Dadurch können Fehler oder Abweichungen frühzeitig erkannt und behoben werden, bevor sie zu gefahrbringenden Ausfällen führen, was die Zuverlässigkeit und Sicherheit des Radarsensorsystems erhöht.

Ein weiterer Vorteil dieser Anordnung ist, dass die Echtzeitfähigkeit des Radarsensors erhalten bleibt. Da die Verifikation und Validierung der Daten kontinuierlich in jedem Zyklus erfolgt, kann das System seine Verifikationsprozesse ohne signifikante Verzögerungen durchführen. Dies ist besonders wichtig für sicherheitskritische Anwendungen, bei denen schnelle und präzise Reaktionen erforderlich sind.

Darüber hinaus trägt die zyklische Einspeisung zur Optimierung der Signalverarbeitungsalgorithmen bei. Durch die regelmäßige Einspeisung und Verarbeitung von künstlichen Objektdaten in jedem Zyklus erhält das System ein kontinuierliches Feedback über die Algorithmen, was deren Genauigkeit und Zuverlässigkeit verbessern kann.

In einer weiteren Ausgestaltung ist der Arbeitsspeicher in einen ersten Bereich und einen zweiten Bereich unterteilt, wobei der erste Bereich Rohdaten enthält, die einem räumlichen Überwachungsbereich zuordenbar sind, und der zweite Bereich Rohdaten enthält, die einem Bereich außerhalb des räumlichen Überwachungsbereichs zuordenbar sind, wobei die künstlichen Objektdaten in den zweiten Bereich eingespeist werden.

Ein Vorteil dieser Anordnung ist die Vermeidung von Interferenzen zwischen realen und künstlichen Objektdaten. Durch die Einspeisung der künstlichen Objektdaten in den zweiten Bereich des Arbeitsspeichers, der außerhalb des überwachten Bereichs liegt, wird sichergestellt, dass die künstlichen Daten die Echtzeitüberwachung der realen Umgebung nicht beeinträchtigen. Dies ermöglicht eine präzise und zuverlässige Überwachung des überwachten Bereichs bei gleichzeitiger kontinuierlicher Überprüfung der Funktionsfähigkeit und Genauigkeit des Gesamtsystems.

In einer weiteren Ausgestaltung definieren die künstlichen Objektdaten einen Abstand, einen Winkel und/oder eine Geschwindigkeit des mindestens einen künstlichen Objekts.

Die Definition der künstlichen Objektdaten bezüglich des Abstands, des Winkels und/oder der Geschwindigkeit der künstlichen Objekte bietet mehrere Vorteile für die Sicherheit eines Radarsensorsystems. Durch die Definition dieser spezifischen Parameter können die künstlichen Objektdaten gezielt zur Validierung der gesamten Signalverarbeitungskette eingesetzt werden. Ein wesentlicher Vorteil dieses Ansatzes ist die Möglichkeit, verschiedene Szenarien und Umgebungsbedingungen zu simulieren. Durch die gezielte Einstellung der Parameter können Tests unter realistischen Bedingungen durchgeführt werden, um sicherzustellen, dass der Radarsensor in verschiedenen Szenarien zuverlässig funktioniert. Dies ermöglicht eine umfassende Validierung und erhöht die Sicherheit und Zuverlässigkeit des Systems.

Darüber hinaus ermöglicht diese Anordnung eine schnelle Fehlerdiagnose und Fehlerbehebung. Werden die erwarteten Auswerteergebnisse für die künstlichen Objekte nicht erreicht, kann das System gezielt analysieren, welche Parameter (Abstand, Winkel oder Geschwindigkeit) fehlerhaft verarbeitet wurden. Dies erleichtert die Identifikation der spezifischen Fehlerquelle und ermöglicht eine besser Fehlerdiagnose. Diese präzise Diagnosefähigkeit erhöht die Zuverlässigkeit und Sicherheit des Systems, da potenzielle Fehler frühzeitig erkannt und behoben werden können.

In einer weiteren Ausgestaltung wird in einem Einrichtbetrieb ein Überwachungsbereich mit der Radarsensorkomponente aufgenommen, um reale Erkennungsdaten von statischen Objekten in dem Überwachungsbereich zu bestimmen, und in einem Überwachungsbetrieb weisen die künstlichen Objektdaten die realen Erkennungsdaten auf. Mit anderen Worten: Im Überwachungsbetrieb können die realen Erkennungsdaten aus dem Einrichtungsbetrieb anstelle der künstlichen Objektdaten zur Validierung der gesamten Signalverarbeitungskette eingesetzt werden.

Die Anordnung, bei der in einem Einrichtbetrieb ein Überwachungsbereich mit dem Radarsensor aufgenommen wird, um reale Erkennungsdaten von statischen Objekten in dem Überwachungsbereich zu bestimmen, bietet mehrere Vorteile, insbesondere in Bezug auf die Berücksichtigung realer Objekte im Hintergrund. Einer der Hauptvorteile dieser Methode ist die Möglichkeit, eine Basislinie für die Überwachung zu erstellen. Durch die Aufnahme von realen Erkennungsdaten statischer Objekte während des Einrichtbetriebs kann das System eine Referenz erstellen, die bei späteren Überwachungen verwendet wird. Diese Referenzdaten ermöglichen es dem System, Veränderungen und Bewegungen im überwachten Bereich zu erkennen und zu analysieren, was die Genauigkeit und Zuverlässigkeit der Objekterkennung erheblich erhöht.

Ein weiterer Vorteil dieser Anordnung ist die Verbesserung der Überwachungseffizienz durch die Berücksichtigung realer Objekte im Hintergrund. In vielen Anwendungen der zwei- oder dreidimensionalen Schutzraumüberwachung gibt es Hintergrundobjekte, die nicht Teil der gewünschten Überwachung sind, aber dennoch vom System detektiert werden. Indem das System im Einrichtbetrieb eine detaillierte Karte dieser statischen Hintergrundobjekte erstellt und diese "Hintergrunddetektionen" speichert, kann es später im Überwachungsbetrieb diese Informationen nutzen, um echte Bewegungen von unwichtigen statischen Hintergrundobjekten zu unterscheiden. Dies kann die Anzahl der Fehlalarme reduzieren und so die Effizienz des Überwachungssystems erhöhen. Die realen Erkennungsdaten der statischen Hintergrundobjekte helfen sicherzustellen, dass das System konsistent und zuverlässig arbeitet, indem es bekannte statische Objekte korrekt erkennt und ignoriert.

Zusätzlich trägt diese Methode zur Langzeitstabilität und Kalibrierung des Radarsensorsystems bei. Durch die kontinuierliche Verwendung der während des Einrichtungsbetriebs gesammelten Erkennungsdaten als Referenz kann das System regelmäßig kalibriert werden, um sicherzustellen, dass die Sensoren und Algorithmen präzise bleiben. Diese regelmäßige Kalibrierung trägt dazu bei, Abweichungen und Drift in der Sensorgenauigkeit zu erkennen und zu korrigieren, was die Gesamtleistung und Zuverlässigkeit des Systems über lange Zeiträume verbessert. Wenn die Hintergrundobjekte bei späteren Überwachungen erneut detektiert werden, kann das System daraus schließen, dass alle gewünschten Detektionen im Überwachungsbereich auch sicher funktionieren. Insgesamt bietet die Erfassung von Detektionsdaten während des Einrichtbetriebs und ihre Verwendung im Überwachungsbetrieb eine robuste und effiziente einkanalige Methode zur Gewährleistung der Systemintegrität und -sicherheit durch Verbesserung der Genauigkeit, Effizienz und Langzeitstabilität des Radarsensorsystems.

In einer weiteren Ausgestaltung wird in einem Fall, in dem sich das vorbestimmte Auswerteergebnis für das mindestens eine künstliche Objekt bei der Radarauswertung nicht einstellt, eine sicherheitsgerichtete Funktion ausgeführt, insbesondere eine technische Anlage in einen sicheren Zustand versetzt.

Die Ausgestaltung, bei der in einem Fall, in dem sich die vorbestimmten Auswerteergebnisse für die künstlichen Objekte bei der Radarauswertung nicht einstellen, eine sicherheitsgerichtete Funktion ausgeführt wird, bietet Vorteile für die Sicherheit und Zuverlässigkeit von industriellen Radarsensorsystemen. Ein wesentlicher Vorteil dieser Methode ist die Möglichkeit, sofort Gegenmaßnahmen zu ergreifen, wenn Anomalien oder Fehler in der Radarauswertung erkannt werden. Durch die Implementierung einer sicherheitsgerichteten Funktion, die eine technische Anlage in einen sicheren Zustand überführt, z. B. durch Abschalten der technischen Anlage, wird sichergestellt, dass potenziell gefährliche Situationen vermieden werden. Dies bedeutet, dass im Falle einer Fehlauswertung oder eines Systemausfalls das System automatisch reagiert, um die Sicherheit der Umgebung und der beteiligten Personen zu gewährleisten.

In einer weiteren Ausgestaltung stellen die künstlichen Objektdaten spezielle Objekte dar, die durch eine Interaktion zwischen einer Sende- und einer Empfangsantenne repräsentiert werden.

Die Ausgestaltung, bei der die künstlichen Objektdaten spezielle Objekte repräsentieren, die durch eine Interaktion zwischen einer Sende- und Empfangsantenne entstehen, bietet mehrere Vorteile für die Funktionsprüfung, Verifikation und Diagnose eines Radarsensorsystems. Unter der Generierung von radarspezifischen Sonderobjekten durch die direkte Kopplung von Sende- und Empfangsantenne versteht man die bewusste Erzeugung von Signalen innerhalb eines Radarsystems, die nicht durch externe Reflexionen von realen Objekten, sondern durch interne Wechselwirkungen zwischen Sende- und Empfangsantenne entstehen. Diese speziellen Objekte können für verschiedene Zwecke verwendet werden, insbesondere zur Funktionsprüfung, Verifikation und Diagnose des Radarsystems.

Da die speziellen Objekte systemintern erzeugt werden, können ihre Parameter genau definiert und reproduziert werden. Dies ermöglicht eine kontinuierliche Funktionsprüfung des Systems unter standardisierten Bedingungen, um die korrekte Funktion der Sende- und Empfangsantennen und die Genauigkeit der Sensordaten zu gewährleisten. Durch die gezielte Erzeugung spezieller Objekte und der zugehörigen künstlichen Objektdaten kann das System regelmäßig überprüft werden, um sicherzustellen, dass alle Komponenten ordnungsgemäß funktionieren und die Daten korrekt verarbeitet werden. Dies hilft, mögliche Fehler oder Abweichungen zu erkennen und zu beheben, bevor sie zu gefahrbringenden Ausfällen führen. Die Sonderobjekte dienen somit als Referenzpunkte, an denen die korrekte Funktion des Gesamtsystems überprüft werden kann.

Die Verwendung von radarspezifischen Sonderobjekten für die Verifikation und Diagnose bietet zudem den Vorteil, dass diese Tests unabhängig von externen Umgebungsbedingungen durchgeführt werden können. Da die Sonderobjekte intern erzeugt werden, ist das System nicht auf externe Reflexionen angewiesen, sodass Tests in kontrollierten Umgebungen durchgeführt werden können. Dies ist besonders bei sicherheitskritischen Anwendungen von Vorteil, bei denen eine kontinuierliche und zuverlässige Überwachung unerlässlich ist.

In einer weiteren Ausgestaltung ist die industrielle Radarsensorkomponente ein integrierter Schaltkreis, insbesondere ein Ein-Chip-System, in dem die Vielzahl der Subsysteme integriert ist.

Die Ein-Chip-Integration bietet Vorteile hinsichtlich der Herstellung und der Skalierbarkeit des Radarsensorsystems. Die Herstellung eines einzigen Chips, der alle notwendigen Subsysteme integriert, ist in der Regel kostengünstiger und einfacher zu skalieren als die Herstellung und Montage mehrerer Einzelkomponenten. Dies ermöglicht eine effiziente Massenproduktion und senkt die Produktionskosten. Darüber hinaus vereinfacht die Ein-Chip-Integration die Wartung und Reparatur des Systems, da weniger Einzelteile ausgetauscht oder repariert werden müssen.

Durch die Integration sicherheitskritischer Funktionen und Mechanismen direkt auf dem Chip können auch Sicherheitsanforderungen wie SIL (Safety Integrity Level) und ASIL (Automotive Safety Integrity Level) besser erfüllt werden, da viele Sicherheitsfunktionen bereits auf dem Chip integriert und vorab getestet sind. Somit müssen nur noch bestimmte Subsysteme abgesichert werden, was effektiver und einfacher möglich ist, wenn einzelne Subsysteme bereits abgesichert sind und bei einer Sicherheitsbetrachtung nicht erneut berücksichtigt werden müssen.

Es versteht sich von selbst, dass die vorstehend genannten und die nachstehend noch zu erläuternden Merkmale nicht nur in der jeweils angegebenen Kombination, sondern auch in anderen Kombinationen oder einzeln verwendet werden können, ohne den Rahmen der vorliegenden Erfindung zu verlassen.

Ausführungsbeispiele der Erfindung sind in der Zeichnung dargestellt und werden in der nachfolgenden Beschreibung näher erläutert.
Fig. 1 zeigt ein Anwendungsszenario für industrielle Radarsensoren.
Fig. 2 zeigt in einer perspektivischen Ansicht ein Beispiel für einen industriellen Radarsensor.
Fig. 3 zeigt in einem Blockschaltbild ein Beispiel für den Aufbau einer Radarsensorkomponente, die im industriellen Radarsensor nach Fig. 1 verwendet wird.
Fig. 4 zeigt in einem Flussdiagramm ein Ausführungsbeispiel eines Verfahrens zur Absicherung einer Radarsensorkomponente.
Fig. 5 zeigt in einem Flussdiagramm ein Beispiel für den Ablauf einer Radarauswertung, die das Sicherungsverfahren nach Fig. 4 integriert.
Fig. 6 zeigt in einer schematischen Darstellung den logischen Aufbau eines RadarCubes mit zusätzlichen künstlichen Objektdaten.

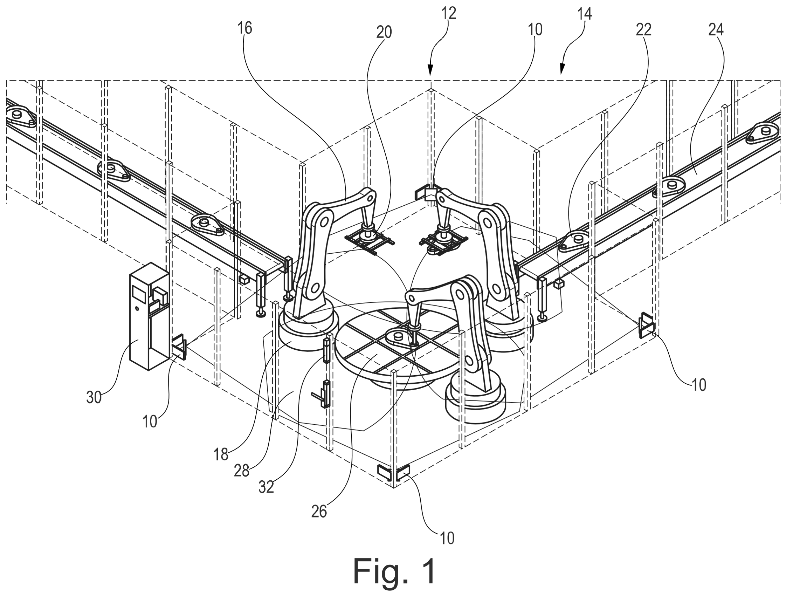

Fig. 1 zeigt an einem Beispiel einer industriellen Fertigungszelle ein mögliches Anwendungsszenario von Radarsensoren 10 in der sicheren Automatisierungstechnik.

In Fig. 1 ist die industrielle Fertigungszelle 12 von einer trennenden Schutzeinrichtung umgeben. Die trennende Schutzeinrichtung ist hier eine Schutzeinhausung 14, d. h. eine komplette Umhausung, die die gesamte Maschine oder große Teile davon umschließt und den Zugang auf bestimmte, kontrollierte Punkte beschränkt. Natürlich kann die trennende Schutzeinrichtung auch eine andere physische Barriere sein, wie z. B. ein Schutzgitter oder ein Schutzzaun, der den unbefugten Zugang zur Maschine oder zu anderen Gefahrbereichen verhindert.

Innerhalb der Schutzeinhausung 14 sind hier beispielhaft für eine technische Anlage drei Industrieroboter 16 angeordnet, die jeweils auf einem Sockel 18 montiert sind. Die Industrieroboter 16 sind mit Greifern 20 ausgestattet, die Werkstücke 22 von einem Förderband 24 aufnehmen und zu einer Bearbeitungsstation 26 transportieren.

Die Schutzeinhausung 14 ist hier einseitig durch eine Schutztür 28 zugänglich, die den Zugang zu der industriellen Fertigungszelle 12 in das Innere der Schutzeinhausung 14 ermöglicht. Zur Absicherung des durch die Schutzeinhausung 14 definierten Schutzraums sind Radarsensoren 10 installiert, die den Bereich innerhalb der Schutzeinhausung 14 überwachen. Die Radarsensoren 10 sind an den Ecken und Zugängen der Schutzeinhausung 14 positioniert, um eine vollständige Abdeckung des Arbeitsbereichs des Roboters zu gewährleisten.

Bei einem unzulässigen Eindringen einer Person oder eines Gegenstandes in die Schutzeinhausung erkennen die Radarsensoren 10 dieses Eindringen und überführen die Industrieroboter 16 in einen sicheren Zustand, bspw. mittels einer Sicherheitsschalteinrichtung. Dieser sichere Zustand kann ein sofortiger Stopp der Bewegungen sein, z. B. durch Abschalten der Stromversorgung der Roboter, oder das Einnehmen einer vordefinierten sicheren Position, um Unfälle oder Beschädigungen zu vermeiden.

Eine Steuerung 30 der Fertigungszelle 12 ist außerhalb der Schutzeinhausung 14 angeordnet und ermöglicht die Bedienung und Überwachung der Roboter 16. Die Sicherheitssysteme der Fertigungszelle 12 sind an die Sicherheitsschalteinrichtung, bspw. eine Sicherheitssteuerung, angeschlossen, die als Bestandteil der Steuerung 30 oder separat ausgebildet ist. Neben den Radarsensoren 10 zur Schutzraumüberwachung als Sensor der Sicherheitssysteme ist hier zusätzlich die Schutztür 28 mit einem Sicherheitsschalter 32 ausgestattet, der ein Öffnen der Tür nur bei Stillstand der Roboter 16 zulässt.

Es versteht sich von selbst, dass das hier skizzierte Anwendungsszenario nur exemplarisch zu verstehen ist und Radarsensoren auch in vielen anderen Konstellationen allein oder im Zusammenwirken mit anderen Sicherheitsgebern eingesetzt werden können.

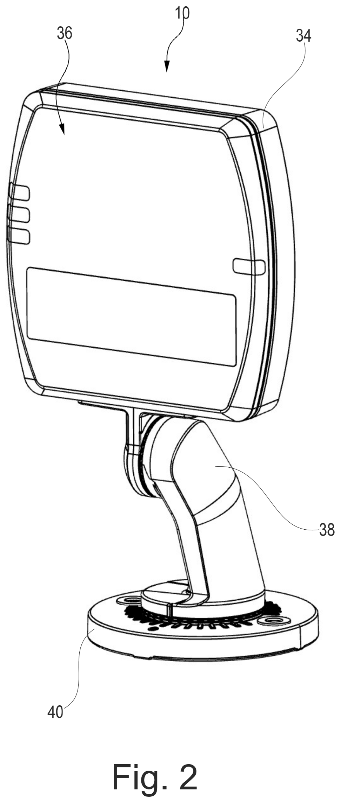

Fig. 2 zeigt einen einzelnen Radarsensor 10, wie er in dem oben beschriebenen Szenario verwendet werden kann. Der Radarsensor 10 weist ein Gehäuse 34 mit einer im Wesentlichen quadratischen Frontabdeckung 36 auf, die für Radarsignale durchlässig ist.

Das Gehäuse 34 ist auf einer Montagehalterung 38 befestigt, die eine Neigung und Drehung des Sensors ermöglicht. Die Montagehalterung 38 ist fest mit einer Grundplatte 40 verbunden, die zur Befestigung des Sensors auf einer ebenen Fläche dient.

Auf der Rückseite des Sensors (nicht sichtbar) befinden sich Anschlussmöglichkeiten für die elektrische Versorgung und die Datenübertragung. Der Radarsensor 10 ist in der Lage, ein definiertes Überwachungsfeld zu erzeugen und Objekte innerhalb dieses Feldes zu detektieren. Bei einer Detektion sendet der Sensor ein Signal an die Auswerteeinheit (nicht dargestellt), die daraufhin entsprechende Maßnahmen einleitet, wie z. B. das Stoppen von Maschinenbewegungen.

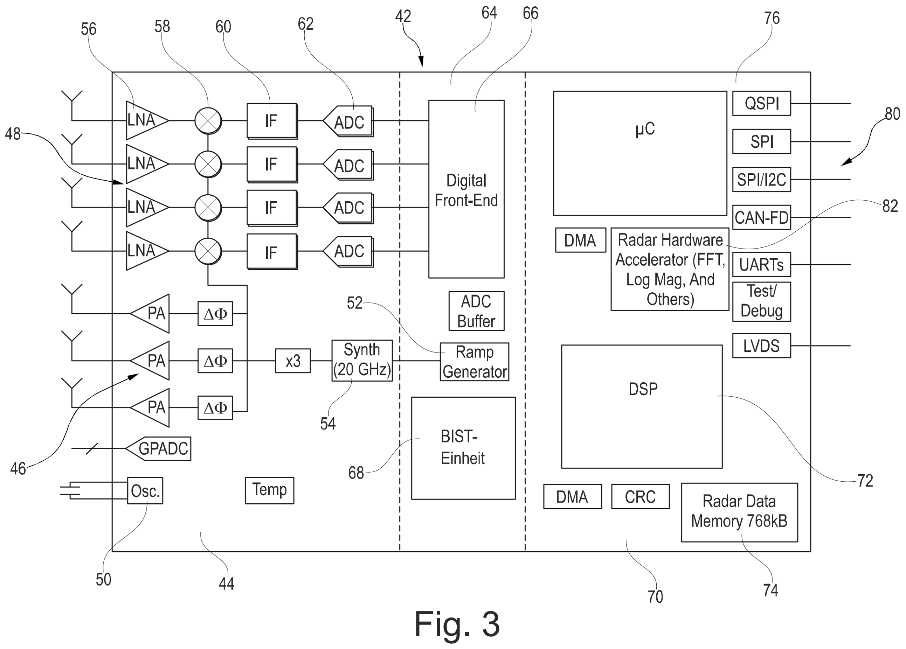

Fig. 3 zeigt in Form eines Blockschaltbildes ein Beispiel für den Aufbau einer Radarsensorkomponente, die für einen industriellen Radarsensor gemäß Fig. 1 verwendet werden kann. Fig. 3 zeigt hier beispielhaft eine Radarsensorkomponente 42 als System-on-Chip (SoC) für einen mmWave-Radarsensor, wie er in der industriellen Automatisierungstechnik eingesetzt wird. Das SoC integriert mehrere Subsysteme, die von der Signalerzeugung über die Signalverarbeitung bis hin zur Kommunikation alle notwendigen Funktionen des Radarsensors 10 auf einem Chip vereinen. Die Subsysteme sind in der Zeichnung durch gestrichelte Linien gekennzeichnet. Es versteht sich, dass die Radarsensorkomponente 42 nicht auf ein SoC beschränkt ist, sondern in einer anderen Ausführung auch aus einzelnen Bausteinen für die verschiedenen Aufgaben ausgebildet sein kann.

Ein erstes Subsystem der gezeigten Radarsensorkomponente 42 ist das Analog/RF-Frontend 44 mit hier drei Sende- und vier Empfangskanälen 46, 48. Die Sendekanäle 46 weisen jeweils einen Leistungsverstärker (PA) sowie Phasenschieber Φ auf. Ein Hochfrequenzoszillator 50 erzeugt die mmWave-Frequenzen, während ein Rampengenerator 52 und ein Synthesizer 54 für die Frequenzmodulation verantwortlich sind.

Die Empfangskanäle 48 enthalten jeweils einen rauscharmen Verstärker 56 (Low Noise Amplifier, LNA), einen Mischer 58, einen Zwischenfrequenzblock 60 (Intermediate Frequency-(IF)-Block) und einen Analog-Digital-Wandler (ADC) 62. Der rauscharme Verstärker 56 dient dazu, das empfangene Signal (HF-Signal) mit minimalem Rauschen zu verstärken. Der Mischer 58 wandelt das HF-Signal durch Mischung mit einem lokalen Oszillatorsignal in eine niedrigere Zwischenfrequenz (ZF-Signal) um. Der Zwischenfrequenzblock 60 erfüllt mehrere Aufgaben, wie z. B. die Verstärkung des ZF-Signals und die Reduzierung von unerwünschtem Rauschen und Störungen. Der Analog-Digital-Wandler 62 wandelt anschließend das analoge ZF-Signal in ein digitales Signal zur weiteren digitalen Signalverarbeitung um.

Die Vorverarbeitung für die digitale Signalverarbeitung erfolgt in einem zweiten Subsystem, dem Radar/BIST-Subsystem 64. Das Subsystem kann ein digitales Front-End 66 aufweisen, das eine digitale Vorverarbeitung der empfangenen Signale durchführt, um die Daten für eine nachfolgende digitale Signalverarbeitung vorzubereiten. Das Subsystem kann ferner eine BIST-Einheit 68 aufweisen. Ein BIST-Einheit 68, auch als BIST-Prozessor (engl. Built-In Self-Test Processor) bezeichnet, ist eine spezialisierte Einheit innerhalb eines Systems, die für die Durchführung von Selbsttests und Kalibrierungen verantwortlich ist. Dieser Prozessor wird integriert, um die Zuverlässigkeit und Funktionalität eines komplexen elektronischen Systems oder einzelner Teilsysteme sicherzustellen.

Eine Funktion des BIST-Prozessors ist die Durchführung automatischer Kalibrierroutinen. Diese Kalibrierung stellt sicher, dass alle Komponenten des Systems korrekt funktionieren und die gewünschten Spezifikationen einhalten. Dies umfasst die Kalibrierung von Oszillatoren, Verstärkern, ADCs (Analog-Digital-Wandlern) und anderen analogen und digitalen Schaltungen.

Darüber hinaus erkennt und diagnostiziert der BIST-Prozessor Fehler im System. Er führt spezifische Testsequenzen durch, um die korrekte Funktion der Komponenten zu überprüfen. Diese Fehlerdiagnose hilft, potenzielle Fehlerquellen zu identifizieren, bevor sie den Betrieb des Gesamtsystems beeinträchtigen können. Darüber hinaus kann die BIST-Einheit 68 periodische Tests durchführen, um sicherzustellen, dass das System oder Subsystem kontinuierlich innerhalb seiner Spezifikationen arbeitet. Diese Tests können während des normalen Betriebs durchgeführt werden, ohne dass das System abgeschaltet werden muss.

Bei Radarsensor-SoC ermöglicht die BIST-Einheit 68, dass einige Subsysteme des SoC für sich genommen (A)SIL-Anforderungen verschiedener Kategorien, z. B. SIL 2 oder ASIL B, ohne weitere Maßnahmen erfüllen. Für die komplexe Signalverarbeitung des nachfolgend beschriebenen Subsystems der digitalen Signalverarbeitung ist dies jedoch häufig nicht möglich, sodass hier der Systemintegrator oder Anwender weitere Maßnahmen ergreifen muss.

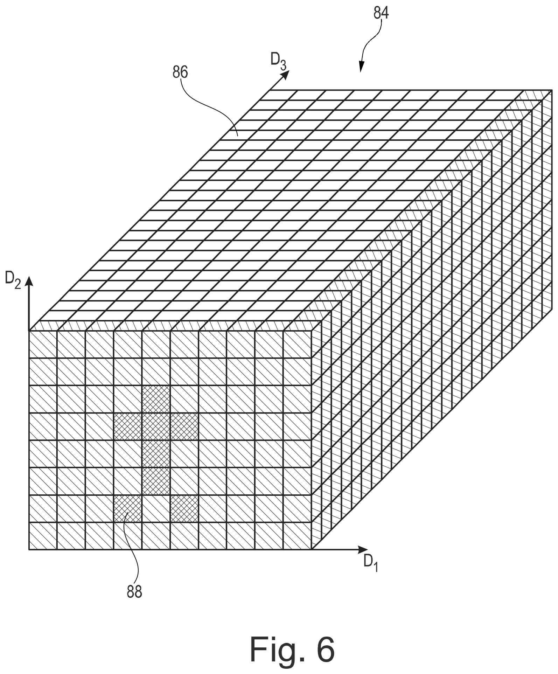

Das Subsystem für die digitale Signalverarbeitung 70, kurz DSP-Subsystem, führt komplexe Signalverarbeitungsalgorithmen aus. Die zentrale Komponente des Subsystems ist ein digitaler Signalprozessor (DSP) 72, der die Echtzeitverarbeitung und Analyse der empfangenen Signale durchführt, um Abstand, Winkel und Geschwindigkeit von Objekten zu berechnen. Der digitale Signalprozessor 72 verfügt neben integrierten Cache-Speichern (L1P, L1D, L2) über einen zentralen Arbeitsspeicher 74, der auch als RadarCube-Speicher bezeichnet wird. Aufbau und Struktur eines solchen RadarCubes werden unter Bezugnahme auf Fig. 6 näher erläutert.

Der digitale Signalprozessor 72 der Radarsensorkomponente 42 übernimmt eine Vielzahl von Aufgaben, die für die Verarbeitung und Interpretation der empfangenen Radarsignale entscheidend sind. Zu diesen Aufgaben gehören beispielsweise: grundlegende Signalverarbeitungsaufgaben, eine Fast Fourier Transformation zur Analyse der Frequenzkomponenten der empfangenen Signale, eine Chirp-Analyse zur Bestimmung der Zeitverzögerung und Frequenzverschiebung der reflektierten Signale, eine Objektdetektion zur Erkennung und Verfolgung von Objekten sowie eine Datenfusion und eine Mustererkennung. Vorzugsweise führt der DSP diese Aufgaben in Echtzeit aus. Dies ist besonders wichtig für sicherheitskritische Anwendungen, bei denen schnelle Reaktionszeiten erforderlich sind, wie z. B. in der Industrieautomation oder in Fahrzeugradarsystemen.

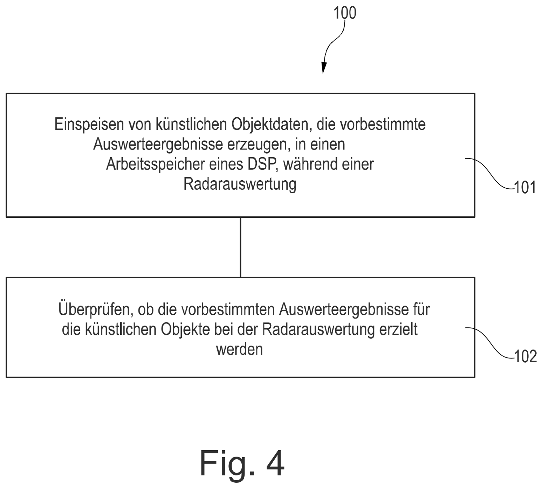

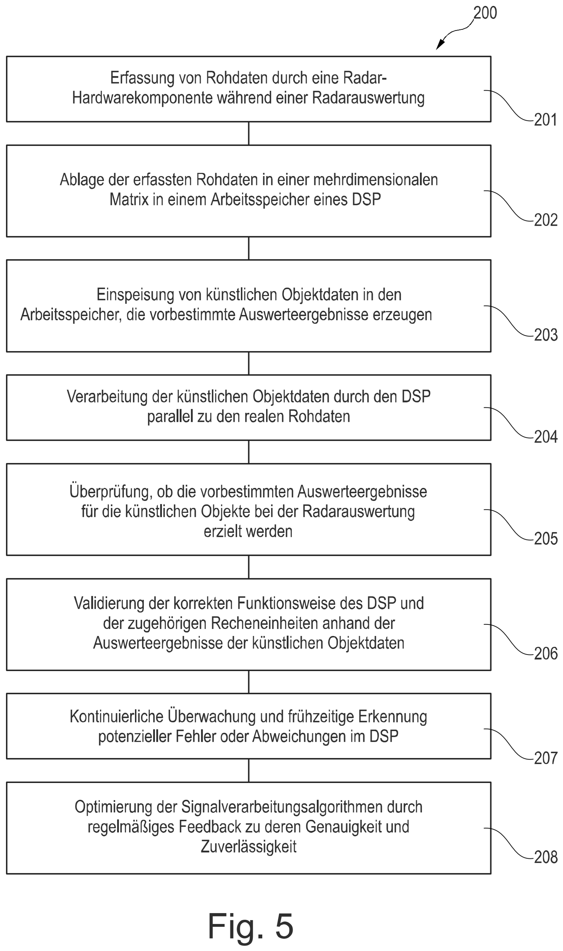

Aufgrund der vielfältigen und komplexen Aufgaben des DSP-Subsystems kann dieses allein in der Regel die Anforderungen spezifischer Sicherheitskategorien nicht erfüllen, sodass hier weitere Maßnahmen zur Erfüllung der Anforderungen getroffen werden müssen, wie z. B. die hier offenbarte Sicherungsmethode, die nachfolgend anhand der Fig. 4 und 5 näher erläutert wird.

Das letzte Subsystem der in Fig. 3 dargestellten Radarkomponente ist das sogenannte Master-Subsystem 76. Das Master-Subsystem steuert das gesamte System und die Schnittstellen zu externen Geräten. Es weist bspw. einen Mikrocontroller (µC) 78 auf, der für die Steuerung, Überwachung und Datenkommunikation zuständig ist, sowie verschiedene Kommunikationsschnittstellen 80, die eine flexible und zuverlässige Datenübertragung ermöglichen. Dazu gehören z.B. QSPI (Quad Serial Peripheral Interface) für schnelle Datenübertragung, SPI/I2C (Serial Peripheral Interface/Inter-Integrated Circuit) für Schnittstellenkommunikation, CAN-FD (Controller Area Network-Flexible Data) für robuste Fahrzeugnetzwerke, UARTs (Universal Asynchronous Receiver-Transmitter) für serielle Kommunikation und LVDS (Low-Voltage Differential Signaling) für Hochgeschwindigkeitsdatenausgabe etc.

Das Master-Subsystem kann weitere Komponenten 82, z. B. Hardware-Beschleuniger, aufweisen, die dedizierte Signalverarbeitungsaufgaben ausführen. Die weiteren Komponenten können unabhängig von dem DSP-Subsystem 70 ausgeführt werden und dieses unterstützen. Beispiele für die weiteren Komponenten 82 sind u. a. Hardware-Beschleuniger für Fast-Fourier-Transformation (FFT), Filterung und frequenzmodulierte kontinuierliche Welle (FMCW), usw.

Wie bereits erwähnt, sind die meisten Subsysteme eigenständig nach verschiedenen Sicherheitskriterien wie SIL 2 oder ASIL B zertifizierbar. Für das Beispiel in Fig. 3 gilt dies unter anderem für das Analog/RF-Frontend 44, das Radar/BIST-Subsystem 64 und das Master-Subsystem 76. Eine Herausforderung stellt jedoch das DSP-Subsystem 70 dar, welches die komplexen Signalverarbeitungsalgorithmen ausführt. Für dieses Subsystem kann es erforderlich sein, dass von einem Systemintegrator oder einem Endanwender weitere Maßnahmen getroffen werden müssen, um eine Zertifizierung zu ermöglichen, wie z. B. das hier offengelegte Verfahren zur Absicherung einer Radarsensorkomponente, das im Folgenden mit Bezug auf Fig. 4 und 5 noch einmal skizziert wird.

Fig. 4 zeigt ein Verfahren zur Absicherung einer industriellen Radarsensorkomponente, die aus einer Vielzahl von Subsystemen gebildet wird. Ein zu überwachendes Subsystem umfasst einen digitalen Signalprozessor (DSP) und einen Arbeitsspeicher (vgl. DSP-Subsystem 70 in Fig. 3). Während der Radarauswertung erfasst eine Radarhardwarekomponente Rohdaten, die in einer mehrdimensionalen Matrix im Arbeitsspeicher abgelegt werden. Parallel dazu werden künstliche Objektdaten, die vorgegebene Auswerteergebnisse erzeugen sollen, in den Arbeitsspeicher eingespeist.

Die künstlichen Objektdaten durchlaufen die gleichen Verarbeitungsketten wie die realen Rohdaten. Nach der Einspeisung der künstlichen Objektdaten in den Arbeitsspeicher wird überprüft, ob bei der Radarauswertung die vorgegebenen Auswerteergebnisse erzielt werden. Diese Verifikation validiert in Echtzeit die korrekte Funktion des DSP und der zugehörigen Recheneinheiten und ermöglicht somit eine Zertifizierung des Subsystems nach relevanten Sicherheitskriterien wie SIL 2 oder ASIL B. Diese einkanalige Verifikation ermöglicht eine einfache, effiziente, effektive und kostengünstige Absicherung des Subsystems.

Die wesentlichen Schritte des Verfahrens 100 sind daher das Einspeisen von künstlichen Objektdaten in den Arbeitsspeicher, die bei der Radarauswertung unter Verwendung der industriellen Radarsensorkomponente 101 vorgegebene Auswerteergebnisse erzeugen sollen, sowie das Überprüfen, ob bei der Radarauswertung 102 die vorgegebenen Auswerteergebnisse für die künstlichen Objekte erzielt werden. Mit anderen Worten werden durch die künstlichen Objektdaten virtuelle Objekte mit definierten Eigenschaften erzeugt, die von der Radarauswertung 102 entsprechend erkannt werden müssen.

Fig. 5 zeigt beispielhaft den Ablauf einer Radarauswertung, die das obige Sicherungsverfahren integriert.

Die Radarauswertung durchläuft die folgenden Schritte: Erfassung 201 von Rohdaten durch eine Radarhardwarekomponente; Ablage 202 der erfassten Rohdaten in einer mehrdimensionalen Matrix in dem Arbeitsspeicher; Einspeisung 203 von künstlichen Objektdaten, die vorbestimmte Auswerteergebnisse erzeugen sollen, in den Arbeitsspeicher; Verarbeitung 204 der künstlichen Objektdaten durch den digitalen Signalprozessor parallel zu den realen Rohdaten; Überprüfung 205, ob die vorgegebenen Auswerteergebnisse für die künstlichen Objekte bei der Radarauswertung erzielt werden; Validierung 206 der korrekten Funktionsweise des digitalen Signalprozessors und der zugehörigen Recheneinheiten anhand der Auswerteergebnisse der künstlichen Objektdaten; und optional kontinuierliche Überwachung 207 und frühzeitige Erkennung von potenziellen Fehlern oder Abweichungen im digitalen Signalprozessor; sowie ebenfalls optional Optimierung 208 der Signalverarbeitungsalgorithmen durch regelmäßige Rückmeldung über deren Genauigkeit und Zuverlässigkeit.

Das aufgezeigte Verfahren zur Absicherung einer industriellen Radarsensorkomponente kann somit ohne großen Aufwand in den Ablauf einer normalen Radarauswertung integriert werden. Insbesondere ist keine zusätzliche Hardware zur Realisierung der Absicherung erforderlich, wodurch die Kosten für Absicherung und Zertifizierung reduziert werden können.

Fig. 6 zeigt schematisch einen logischen Aufbau eines RadarCubes mit zusätzlichen künstlichen Objektdaten.

Ein RadarCube-Speicher 84 ist ein spezialisierter Arbeitsspeicherbereich innerhalb einer Radarsensorkomponente (vgl. Fig. 3, Arbeitsspeicher 74), der die Rohdaten aus den empfangenen Radarsignalen effizient organisiert und für die weitere Verarbeitung zugänglich macht. Der RadarCube-Speicher 84 ist in der dargestellten Ausgestaltung dreidimensional organisiert und kann beispielsweise die Dimensionen Zeit (bzw. Chirp-Index), Antennen und Fast-Time (bzw. Range-Bins) aufweisen. Diese Struktur ermöglicht eine geordnete und schnelle Speicherung sowie den Zugriff auf die von den verschiedenen Antennen zu unterschiedlichen Zeitpunkten erfassten Daten.

Die Funktion des RadarCube-Speichers 84 besteht darin, die empfangenen Signale, die in Form von Datenpaketen von den Analog-Digital-Wandlern (ADCs) oder dem ADC-Puffer kommen, zu speichern. Diese Daten, hier durch eine Vielzahl von Blöcken dargestellt, enthalten Informationen über die reflektierten Radarwellen, die von Objekten in der Umgebung des Radarsensors zurückgeworfen werden. Durch die Organisation der Daten in einem mehrdimensionalen Array (hier ein dreidimensionales Array) können Signalverarbeitungsalgorithmen wie die Fourier-Transformation effizient auf diese Daten zugreifen und sie analysieren.

Ein RadarCube-Speicher 84 ermöglicht es dem DSP, die notwendigen Berechnungen durchzuführen, um Abstand, Geschwindigkeit und Position der detektierten Objekte zu bestimmen. Darüber hinaus unterstützt die strukturierte Speicherung die parallele Verarbeitung der Daten, wodurch die Echtzeitfähigkeit des Radarsystems verbessert wird. Der RadarCube-Speicher 84 ist somit eine wesentliche Komponente, die die Leistungsfähigkeit und Genauigkeit moderner Radarsensoren maßgeblich beeinflusst.

Neben den erfassten Rohdaten 86 werden gemäß der vorliegenden Offenbarung auch künstliche Objektdaten 88 in den RadarCube-Speicher 84 eingespeist und gespeichert. Die künstlichen Objekte können dabei so gewählt werden, dass ihre künstlichen Objektdaten 88 in definierten Bereichen innerhalb des RadarCube-Speichers 84 angeordnet sind und sich möglichst nicht mit den realen Rohdaten 86 überschneiden.

In Fig. 6 ist ein Bereich für die künstlichen Objektdaten 88 durch schraffierte Blöcke angedeutet, während in den nicht schraffierten Blöcken die Rohdaten 86 abgelegt werden können. Vorzugsweise sind die Bereiche für die künstlichen Objektdaten 88 jeweils an den technischen Rändern der jeweiligen Dimensionen (D₁, D₂, D₃) angeordnet, sodass den Rohdaten 86 ein möglichst großer und zusammenhängender Block zugeordnet ist, wie in Fig. 6 dargestellt.

Es versteht sich, dass die Bereiche für die Rohdaten 86 und die künstlichen Objektdaten 88 auch anders organisiert sein können, z.B. wenn die künstlichen Objekte auf reale, statische Objekte im Überwachungsbereich abgebildet werden, die zur Verifikation und Überprüfung herangezogen werden sollen.

Grundsätzlich ist für die künstlichen Objekte nur erforderlich, dass ein Auswerteergebnis für diese Objekte bekannt ist, sodass nach der Radarauswertung verifiziert werden kann, ob die künstlichen Objekte korrekt "erkannt" wurden und damit auf eine funktionierende Signalverarbeitungskette geschlossen werden kann. Mit anderen Worten: Die künstlichen Objekte erzeugen eine Erwartungshaltung an die Auswertung, deren Eintreffen die Funktionsfähigkeit der Signalverarbeitung bestätigt.

Es wird darauf hingewiesen, dass die vorstehenden Ausführungsbeispiele nur exemplarisch sind und weitere Varianten einzelner Komponenten möglich sind, um Ausgestaltungen der nachfolgenden Ansprüche zu realisieren. Der Schutzumfang der vorliegenden Erfindung wird durch die folgenden Ansprüche bestimmt und ist nicht durch die in der Beschreibung erläuterten oder in den Figuren dargestellten Merkmale begrenzt.

### Bezugszeichenlist

- 10: Radarsensor
- 12: Fertigungszelle
- 14: Schutzeinhausung
- 16: Roboter
- 18: Sockel
- 20: Greifer
- 22: Werkstück
- 24: Förderband
- 26: Bearbeitungsstation
- 28: Schutztür
- 30: Steuereinheit
- 32: Sicherheitsschalter
- 34: Gehäuse
- 36: Frontabdeckung
- 38: Montagehalterung
- 40: Grundplatte
- 42: Radarsensorkomponente
- 44: Analog/RF-Frontend Subsystem
- 46: Sendekanäle
- 48: Empfangskanäle
- 50: Hochfrequenzoszillator
- 52: Rampengenerator
- 54: Synthesizer
- 56: rauscharmer Verstärker (LNA)
- 58: Mischer
- 60: Zwischenfrequenz-Block
- 62: Analog-Digital-Wandler (ADC)
- 64: Radar/BIST Subsystem
- 66: digitales Frontend
- 68: BIST-Einheit
- 70: DSP-Subsystem
- 72: digitaler Signalprozessor
- 74: Arbeitsspeicher
- 76: Master Subsystem
- 78: Mikrocontroller (µC)
- 80: Kommunikationsschnittstellen
- 82: Weitere Komponenten

## Patentansprüche

1. Verfahren zur Absicherung einer Radarsensorkomponente (42), die eine Vielzahl von Subsystemen (44; 64; 70; 76) aufweist, wobei ein zu überwachendes Subsystem (70) mindestens einen digitalen Signalprozessor (72) und einen Arbeitsspeicher (74) aufweist, in dem während einer Radarauswertung unter Verwendung der Radarsensorkomponente (42) von einer Radarhardwarekomponente erfasste Rohdaten (86) in einer mehrdimensionalen Matrix ablegbar sind, wobei während der Radarauswertung künstliche Objektdaten (88), die mindestens ein künstliches Objekt in der Radarauswertung mit einem vorbestimmten Auswerteergebnis erzeugen, zusätzlich zu den Rohdaten (86) der Radarhardwarekomponente in den Arbeitsspeicher (74) eingespeist werden, wobei nach dem Einspeisen überprüft wird, ob sich das vorbestimmte Auswerteergebnis für das mindestens eine künstliche Objekt bei der Radarauswertung einstellt.

2. Verfahren nach Anspruch 1, wobei die Radarauswertung eine lineare Ablauffolge mit sequenziell aufeinanderfolgenden Prozessschritten beinhaltet, wobei die künstlichen Objektdaten (88) jeden der aufeinanderfolgenden Prozessschritte durchlaufen.

3. Verfahren nach Anspruch 1 oder 2, wobei die Radarauswertung zwei oder mehrere parallele, lineare Ablauffolgen mit sequenziell aufeinanderfolgenden Prozessschritten beinhaltet, wobei für jede der parallelen Ablauffolgen künstliche Objektdaten ausgebildet sind.

4. Verfahren nach einem der Ansprüche 1 bis 3, wobei die Radarhardwarekomponente (42) für die Radarauswertung zyklisch Rohdaten (86) in den Arbeitsspeicher (74) schreibt und die künstlichen Objektdaten (88) zyklisch in den Arbeitsspeicher (74) eingespeist werden.

5. Verfahren nach einem der Ansprüche 1 bis 4, wobei der Arbeitsspeicher (74) in einen ersten Bereich und einen zweiten Bereich unterteilt ist, wobei in dem ersten Bereich Rohdaten liegen, die einem räumlichen Überwachungsbereich zuordenbar sind, und in dem zweiten Bereich Rohdaten, die einem außerhalb des räumlichen Überwachungsbereichs liegenden Bereich zuordenbar sind, wobei die künstlichen Objektdaten (88) in dem zweiten Bereich eingespeist werden.

6. Verfahren nach einem der Ansprüche 1 bis 5, wobei die künstlichen Objektdaten (88) einen Abstand, einen Winkel und/oder eine Geschwindigkeit des mindestens einen künstlichen Objekts definieren.

7. Verfahren nach einem der Ansprüche 1 bis 6, wobei in einem Einrichtbetrieb ein Überwachungsbereich mit der Radarsensorkomponente (42) aufgenommen wird, um reale Erkennungsdaten von statischen Objekten in dem Überwachungsbereich zu bestimmen, und wobei in einem Überwachungsbetrieb die künstlichen Objektdaten (88) die realen Erkennungsdaten aufweisen.

8. Verfahren nach einem der Ansprüche 1 bis 7, wobei in einem Fall, in dem sich das vorbestimmte Auswerteergebnis für das mindestens eine künstliche Objekt bei der Radarauswertung nicht einstellt, eine sicherheitsgerichtete Funktion ausgeführt wird, insbesondere eine technische Anlage in einen sicheren Zustand versetzt wird.

9. Verfahren nach einem der Ansprüche 1 bis 8, wobei die künstlichen Objektdaten Sonderobjekte repräsentieren, die durch eine Interaktion zwischen einer Sendeantenne und einer Empfangsantenne entstehen.

10. Verfahren nach einem der Ansprüche 1 bis 9, wobei die Radarsensorkomponente (42) eine integrierte Schaltung ist, insbesondere ein Ein-Chip-System, in dem die Vielzahl von Subsystemen (44; 64; 70; 76) integriert ist.

11. Vorrichtung zur Absicherung einer Radarsensorkomponente (42), die eine Vielzahl von Subsystemen (44; 64; 70; 76) aufweist, wobei ein zu überwachendes Subsystem (70) mindestens einen digitalen Signalprozessor (72) und einen Arbeitsspeicher (74) aufweist, in dem während einer Radarauswertung unter Verwendung der Radarsensorkomponente (42) von einer Radarhardwarekomponente erfasste Rohdaten (86) in einer mehrdimensionalen Matrix ablegbar sind, wobei die Vorrichtung eine Verarbeitungseinheit aufweist, die eingerichtet ist, während der Radarauswertung künstliche Objektdaten (88), die mindestens ein künstliches Objekt in der Radarauswertung mit einem vorbestimmten Auswerteergebnis erzeugen, zusätzlich zu den Rohdaten (86) der Radarhardwarekomponente in den Arbeitsspeicher (74) einzuspeisen, sowie nach dem Einspeisen zu überprüfen, ob sich das vorbestimmte Auswerteergebnis für das mindestens eine künstliche Objekt bei der Radarauswertung einstellt.
